# FASCICULE DE BREVET EUROPEEN

(11) **EP 4 194 731 B1**
(45) Date de publication et mention de la délivrance du brevet: **25.03.2026**
(21) Numéro de dépôt: 22210965.4
(22) Date de dépôt: 01.12.2022
(51) Int. Cl.: F16L 13/02, F16L 13/08, F16L 41/02

(54) **RACCORD DE PLOMBERIE**
SANITÄR-KUPPLUNG
PLUMBING

(30) Priorité: 09.12.2021 FR 2113190
(43) Date de publication de la demande: 14.06.2023
(73) Titulaire: Hampiaux SAS, 54180 Heillecourt (FR)
(72) Inventeur: CHAPUSOT, Thierry, 54850 MESSEIN (FR); BERNA, Julien, 54770 BOUXIERES AUX CHENES (FR)
(74) Mandataire: Hugues, Catherine

(56) Documents cités:
- GB-A- 870 886
- US-A- 3 286 341
- US-A- 3 334 925
- US-A1- 2021 180 729

## Description

L'invention a trait à un raccord de plomberie et/ou génie climatique destiné à relier au moins deux conduits entre eux, ledit raccord comportant un élément tubulaire en matériau métallique formé d'une paroi périphérique délimitant un passage interne et présentant une face interne ainsi qu'une face externe, une première portion d'extrémité dudit élément tubulaire étant conformée pour coopérer avec une portion d'extrémité d'un des conduits tandis qu'au moins une autre portion d'extrémité est conformée pour coopérer avec une portion d'extrémité d'un autre conduit, l'une au moins des portions d'extrémité, dite « portion d'extrémité à souder » étant conformée pour permettre un assemblage par ajustement serré et soudage avec la portion d'extrémité du conduit considéré, ledit raccord de plomberie comportant au moins une bague d'un matériau pour brasure reliée par des moyens de fixation à la portion d'extrémité à souder de l'élément tubulaire.

A l'heure actuelle, de nombreux modèles de raccords de plomberie et/ou génie climatique, spécifiquement dédiés à une grande variété d'applications ou de besoins ont d'ores et déjà été développés, de sorte que l'on trouve sur le marché toute une gamme de produits se différenciant les uns des autres essentiellement par leur structure, leurs matériaux de fabrication, leur diamètre et leur coût.

Comme indiqué ci-dessus, un raccord de plomberie et/ou génie climatique est un élément de jonction permettant d'assembler des tuyaux, présentant ou non un diamètre identique, par exemple dans le prolongement l'un de l'autre, de ménager un angle entre deux tuyaux lorsqu'il s'agit d'un coude, ou encore de relier trois tuyaux entre eux, ou de relier un tuyau avec une terminaison de tube, etc.

De manière connue, l'installation d'un raccord de plomberie et/ou génie climatique représente une opération délicate dont le but est d'aboutir à un réseau de circulation de fluide adapté aux particularités de la configuration rencontrée, et présentant impérativement aussi bien une résistance mécanique élevée qu'une étanchéité irréprochable.

Dans ce contexte, afin de prévenir toute fuite ou rupture intempestive d'une conduite, l'opération de soudage, classiquement mise en œuvre pour assembler des raccords de plomberie et/ou génie climatique, réalisés en matériau métallique, avec des conduits en cuivre, acier, inox ou laiton, doit être exécutée avec le plus grand soin.

Pour rappel, cette opération est couramment réalisée manuellement, par un opérateur, et comporte plusieurs étapes successives de préparation des pièces, comprenant notamment une étape d'application d'un produit décapant, puis une étape de soudage à proprement parler.

Celle-ci consiste, après emboîtement des pièces à assembler, à chauffer la zone de jonction au moyen d'un chalumeau ou d'une lampe à souder, jusqu'à une certaine température, puis à placer au contact de la zone réchauffée un fil ou une baguette d'un matériau d'apport, destiné à fondre et se glisser par capillarité dans l'interstice entre les deux pièces. La solidification par refroidissement du matériau de brasure confère ensuite à la zone de jonction la résistance mécanique et l'étanchéité requises.

Il a été observé que l'étape de soudage à proprement parler est fastidieuse, et présente l'inconvénient, pour être réalisée convenablement, de nécessiter une grande dextérité de la part de l'opérateur.

Celui-ci est en effet supposé manipuler le chalumeau d'une main tout en maintenant le fil ou la baguette de métal d'apport de son autre main. Ses deux mains étant monopolisées, il lui est impossible de tenir en même temps les pièces à assembler ou de tenir éventuellement le chalumeau de ses deux mains, ce qui peut être handicapant dans certains cas.

Les publications US 2021/180729, US 3 286 341, US 3 334 925 et GB 870 886 décrivent des raccords de plomberie et/ou génie climatique intégrant au moins une bague d'un matériau pour brasure, destinée à pallier ce problème.

Par ailleurs, pour garantir un brasage de qualité, le matériau de brasage ne doit pas fondre au contact de la flamme du chalumeau, mais uniquement au contact du métal des pièces à assembler, qui ne doit pas dépasser une certaine température sous peine d'éventuelles dégradations de ces mêmes pièces. A cet effet, l'opérateur doit à la fois s'assurer du positionnement convenable et du calage du matériau de brasage d'une de ses mains et maîtriser la flamme du chalumeau de son autre main, tout au long de l'intervention, ce qui nécessite à la fois de la force physique et de la concentration.

De plus, une difficulté supplémentaire est définie par le fait que les pièces à assembler doivent rester impérativement immobiles et correctement orientées l'une par rapport à l'autre jusqu'au refroidissement complet de la zone de jonction. L'opérateur ayant ses deux mains occupées pendant l'intervention, doit donc recourir à un moyen indépendant de blocage en position des deux pièces l'une par rapport à l'autre et prendre ensuite garde à ne pas les déplacer involontairement. C'est la raison pour laquelle l'opérateur utilise couramment un établi ou fait appel à une main supplémentaire pour caler les pièces lors de la brasure, ce qui suppose de disposer d'un équipement et/ou d'une main d'œuvre additionnelle.

Il est en outre à noter qu'au cas où la jonction obtenue après soudage serait défectueuse, l'ensemble des opérations d'assemblage doit impérativement être renouvelé, augmentant d'autant la durée du chantier et la consommation de gaz pour alimenter la flamme du chalumeau ou de la lampe à souder, de même que les quantités de produit décapant, et de matériau d'apport. De plus, dans ce cas, les pièces concernées peuvent également se révéler irrécupérables et donc être mises au rebut, ce qui est à l'origine de coûts supplémentaires inopportuns, puisqu'il est alors nécessaire de recourir à un raccord de plomberie et/ou génie climatique et des conduits intacts. De tout évidence, tout éventuel échec d'un assemblage par soudage de pièces de plomberie et/ou génie climatique est pénalisant aussi bien d'un point de vue financier que d'un point de vue environnemental, de sorte qu'une préoccupation permanente des maîtres d'œuvre et des opérateurs est de parvenir à l'éviter.

Le but de la présente invention est de pallier l'ensemble des inconvénients mentionnés ci-dessus et de fournir une solution permettant de simplifier l'étape de soudage que suppose une opération d'assemblage d'un raccord de plomberie et/ou génie climatique et d'un conduit, réalisés en matériaux métalliques, en vue d'optimiser la durée des chantiers et limiter les coûts correspondants tout en garantissant la qualité de la jonction obtenue.

En d'autres termes, la présente invention entend fournir un raccord de plomberie et/ou génie climatique innovant permettant d'exécuter plus rapidement, avec davantage d'aisance et une qualité garantie, l'étape de soudage que suppose son assemblage avec un ou plusieurs tuyaux.

Un autre but de l'invention est de fournir un raccord de plomberie et/ou génie climatique dont la structure est étudiée pour garantir la réussite, du premier coup, de l'opération d'assemblage avec un conduit, que celle-ci soit effectuée par un professionnel expérimenté comme par un bricoleur moins chevronné.

A cet effet, l'invention a pour objet un raccord de plomberie et/ ou génie climatique du genre indiqué en préambule, caractérisé en ce qu'il comporte des moyens d'indication d'une température donnée de la portion d'extrémité à souder de l'élément tubulaire.

Par ailleurs, selon le cas, le raccord de plomberie et/ou génie climatique selon l'invention peut également présenter l'une ou plusieurs des caractéristiques suivantes :
- La bague est fixée sur la face interne de la paroi périphérique de l'élément tubulaire,
- La bague est disposée à une distance D, D' d'une extrémité libre de la portion d'extrémité à souder et présente un volume compris entre 1,4 et 2 fois le volume de l'interstice destiné à s'étendre entre la portion d'extrémité à souder et la portion d'extrémité du tube avec laquelle elle est destinée à coopérer,
- Il comporte au moins une bande d'un matériau adapté pour changer d'aspect au fil d'une opération de soudage et pour présenter un aspect final représentatif de l'achèvement d'une opération de soudage, ladite bande recouvrant au moins partiellement la face externe de la paroi périphérique de l'élément tubulaire au niveau de la portion d'extrémité à souder,
- Les moyens de fixation de la bague sur la paroi périphérique de l'élément tubulaire sont définis par des butées de blocage réalisées par emboutissage sur la portion d'extrémité à souder de l'élément tubulaire,
- La bague est hébergée dans un logement ménagé au niveau de la portion d'extrémité à souder de l'élément tubulaire,
- Le logement est défini par un épaulement s'étendant dans le passage interne de l'élément tubulaire ou par une rainure formée dans la face interne de la paroi périphérique de l'élément tubulaire,
- La bague est enrobée d'une couche d'un produit décapant,
- Chacune des portions d'extrémité de l'élément tubulaire définit une « portion d'extrémité à souder » et est conformée pour permettre un assemblage par ajustement serré et soudage avec une portion d'extrémité d'un conduit, tandis que la face externe de chacune d'entre elles est au moins partiellement recouverte d'une bande d'un matériau adapté pour changer d'aspect au fil d'une opération de soudage et pour présenter un aspect final représentatif de l'achèvement d'une opération de soudage.

La compréhension de cette description sera facilitée en se référant aux figures suivantes :

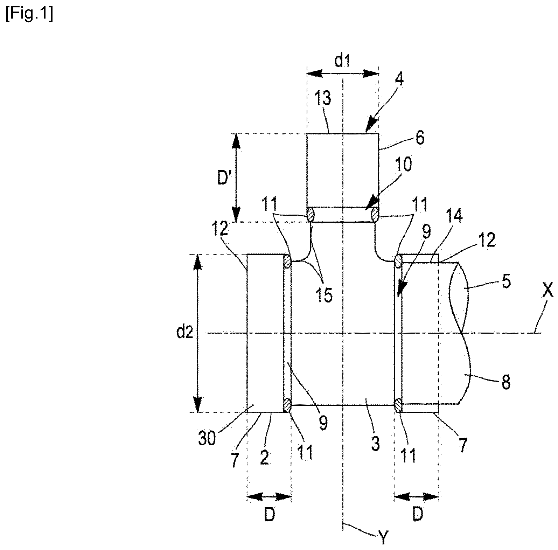

[Fig.1] est une vue en coupe d'un exemple de réalisation d'un raccord de plomberie et/ou génie climatique selon l'invention, juste avant son assemblage par soudage avec un premier conduit, et

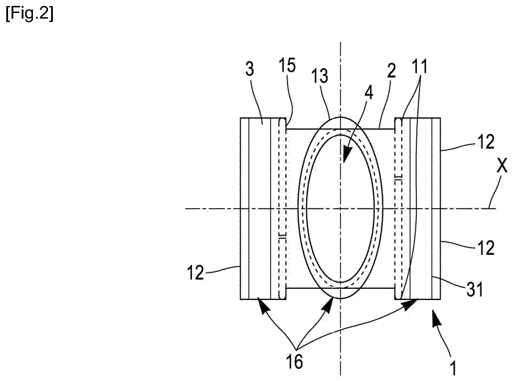

[Fig.2] est une vue de face du raccord de plomberie et/ou génie climatique de la figure 1.

En référence aux figures, dans la variante de réalisation illustrée, le raccord de plomberie et/ou génie climatique 1 selon l'invention est défini par un Té en cuivre, destiné à relier entre eux trois conduits 5, également en cuivre.

De manière classique, le raccord 1 est constitué d'un élément tubulaire 2 en cuivre formé d'une paroi périphérique 3, présentant une face interne 30 ainsi qu'une face externe 31 et délimitant un passage interne 4.

Dans la variante de réalisation illustrée, l'élément tubulaire 2 comporte une première portion d'extrémité 6 de diamètre d1 et deux portions d'extrémité 7 de diamètre d2 supérieur à d1.

Tel que visible, les portions d'extrémité 7 sont alignées le long d'un axe X, tandis que la portion d'extrémité 6 s'étend le long d'un axe Y formant un angle de 90° avec l'axe X. En somme, après assemblage avec le raccord de plomberie 1, deux conduits 5 seront coaxiaux et situés dans le prolongement l'un de l'autre, perpendiculairement à un troisième conduit 5.

Il à noter que les trois portions d'extrémité 6, 7 définissent des « portions d'extrémité à souder » au sens où elles sont chacune conformée pour permettre un assemblage par ajustement serré et soudage avec une portion d'extrémité 8 d'un conduit 5.

A cet effet, conformément à l'invention, les trois portions d'extrémité 6, 7 du raccord de plomberie 1 sont équipées chacune d'une bague 9, 10 d'un matériau pour brasure, tel que de l'étain, de l'argent phosphore, du brox, ou tout autre matériau présentant des propriétés équivalentes. La face interne des trois portions d'extrémité 6, 7 peut avantageusement être recouverte d'une couche d'un produit décapant approprié, permettant d'éliminer le vernis de protection lors de la chauffe des pièces pendant l'opération de soudage et ainsi favoriser le phénomène de capillarité. Il est à noter que le même effet peut être obtenu en enrobant chaque bague 9, 10, d'une couche d'un produit décapant avant son implantation dans la portion d'extrémité considérée.

En référence aux dessins, dans la variante de réalisation illustrée, les trois bagues 9, 10 sont disposées dans le passage interne 4 de l'élément tubulaire 2, à une distance D, D' de l'extrémité libre 12, 13 de la portion 6, 7 d'extrémité à souder considérée. Elles sont fixées sur la face interne 30 de la paroi périphérique 3 de l'élément tubulaire 2 par plusieurs butées de blocage 11 réalisées par emboutissage de l'élément tubulaire 2 et s'étendant dans le passage interne 4. Bien entendu, d'autres types de moyens de fixation des bagues 9, 10 dans le passage interne 4 peuvent également être prévus, sans pour autant sortir du champ de la présente invention.

Il est à noter que chaque bague 9, 10 présente un volume compris entre 1,4 et 2 fois le volume de l'interstice 14 destiné à s'étendre entre la portion d'extrémité à souder 6, 7 et la portion d'extrémité 8 du conduit 5 avec laquelle elle est destinée à coopérer. De plus, chaque bague 9, 10 est hébergée dans un logement ménagé au niveau de la portion d'extrémité à souder 6, 7. Dans la variante de réalisation illustrée, ce logement est défini par un épaulement 15 s'étendant dans le passage interne 4 de l'élément tubulaire 2. Bien entendu, un autre type de logement, tel que par exemple une rainure formée dans la face interne 30 de l'élément tubulaire 2 peut également être envisagé.

Une autre caractéristique avantageuse du raccord de plomberie 1 illustré par les figures, est définie par le fait qu'il comporte des moyens indicatifs de l'atteinte d'une température donnée par les portions d'extrémité 6, 7 de l'élément tubulaire 2.

Il a à cet effet été imaginé de recouvrir au moins partiellement la face externe 31 de la paroi périphérique 3 de l'élément tubulaire 2, au niveau de chaque portion d'extrémité à souder 6, 7, d'une bande 16 d'un matériau adapté pour changer d'aspect au fil d'une opération de soudage et pour présenter un aspect final représentatif d'une température donnée correspondant à l'achèvement d'une opération de soudage.

Un tel matériau peut par exemple être défini par une peinture témoin, le cas échéant prévue d'une couleur différente pour chaque portion d'extrémité à souder 6, 7 et dont la disparition sous l'effet de la flamme du chalumeau permettra de signaler à l'opérateur l'achèvement de l'opération de soudage.

Ainsi, en pratique, la mise en œuvre du raccord de plomberie 1 selon l'invention consiste pour l'opérateur à accomplir les étapes suivantes :
- emboîter une portion d'extrémité 8 d'un conduit 5 dans une portion d'extrémité à souder 6, 7 du raccord de plomberie 1 jusqu'à ce que la portion d'extrémité 8 du conduit 5 parvienne au contact de la bague d'étain 9, 10 correspondante,
- bloquer en position les pièces emboîtées par des moyens de maintien appropriés,
- appliquer la flamme d'un chalumeau ou d'une lampe à souder tout autour de la zone de jonction entre la portion d'extrémité à souder 6, 7 du raccord de plomberie 1 et la portion d'extrémité 8 du conduit 5 jusqu'à disparition complète de la bande 16 de peinture témoin.

A ce stade, la bague de métal d'apport 9, 10 a totalement fondu et le métal s'est répandu par capillarité dans l'intégralité de l'interstice 14 s'étendant entre la portion d'extrémité à souder 6, 7 du raccord de plomberie 1 et la portion d'extrémité 8 du conduit 5.

De manière classique, une parfaite étanchéité et une haute résistance mécanique sont obtenues après refroidissement de la zone de jonction. L'opérateur peut ensuite procéder de manière similaire pour relier le raccord de plomberie 1 avec les deux autres conduits 5.

Tel qu'il ressort de ce qui précède, l'invention permet d'atteindre les objectifs mentionnés en préambule, et de fournir un raccord de plomberie dont la mise en œuvre est simplifiée, et permet de garantir la qualité, en termes d'étanchéité et de résistance mécanique des zones de jonction réalisées. Un tel raccord de plomberie permet ainsi d'optimiser les coûts des chantiers, et d'élargir le marché en permettant sa mise en œuvre non seulement par des professionnels formés mais également par des personnes novices.

## Revendications

1. Raccord (1) de plomberie destiné à relier au moins deux conduits (5) entre eux, comportant un élément tubulaire (2) en matériau métallique formé d'une paroi périphérique (3) délimitant un passage interne (4) et présentant une face interne (30) ainsi qu'une face externe (31), une première portion d'extrémité (6, 7) dudit élément tubulaire (2) étant conformée pour coopérer avec une portion d'extrémité (8) d'un des conduits (5) tandis qu'au moins une autre portion d'extrémité est conformée pour coopérer avec une portion d'extrémité d'un autre conduit, l'une au moins des portions d'extrémité, dite portion d'extrémité à souder (6, 7) étant conformée pour permettre un assemblage par ajustement serré et soudage avec la portion d'extrémité (8) du conduit (5) considéré, ledit raccord de plomberie (1) comportant au moins une bague (9, 10) d'un matériau pour brasure reliée par des moyens de fixation à la portion d'extrémité à souder (6, 7) de l'élément tubulaire (2) ainsi que des moyens d'indication d'une température donnée de la portion d'extrémité à souder (6, 7) de l'élément tubulaire (2) et étant **caractérisé en ce qu'**il comporte au moins une bande (16) d'un matériau adapté pour changer d'aspect au fil d'une opération de soudage et pour présenter un aspect final représentatif de l'achèvement d'une opération de soudage, ladite bande (16) recouvrant au moins partiellement la face externe (31) de la paroi périphérique (3) de l'élément tubulaire (2) au niveau de la portion d'extrémité à souder (6, 7).

2. Raccord de plomberie (1) selon la revendication 1, **caractérisé en ce que** ladite bague (9, 10) est fixée sur la face interne (30) de la paroi périphérique (3) de l'élément tubulaire (2).

3. Raccord de plomberie (1) selon l'une quelconque des revendications 1 ou 2, **caractérisé en ce que** la bague (9, 10) est disposée à une distance (D, D') d'une extrémité libre (12, 13) de la portion d'extrémité (6, 7) à souder et présente un volume compris entre 1,4 et 2 fois le volume de l'interstice (14) destiné à s'étendre entre la portion d'extrémité à souder (6, 7) et la portion d'extrémité (8) du conduit (5) avec laquelle elle est destinée à coopérer.

4. Raccord de plomberie (1) selon l'une quelconque des revendications précédentes, **caractérisé en ce que** les moyens de fixation de la bague (9, 10) sur la paroi périphérique (3) de l'élément tubulaire (2) sont définis par des butées de blocage (11) réalisés par emboutissage sur la portion d'extrémité à souder (6, 7) de l'élément tubulaire (2).

5. Raccord de plomberie (1) selon l'une quelconque des revendications précédentes, **caractérisé en ce que** la bague (9, 10) est hébergée dans un logement ménagé au niveau de la portion d'extrémité à souder (6, 7).

6. Raccord de plomberie (1) selon la revendication 5, **caractérisé en ce que** le logement est défini par un épaulement (15) s'étendant dans le passage interne (4) de l'élément tubulaire (2) ou une rainure formée dans la face interne (30) de la paroi périphérique (3) de l'élément tubulaire (2).

7. Raccord de plomberie (1) selon l'une quelconque des revendications précédentes, **caractérisé en ce que** la bague (9, 10) est enrobée d'une couche d'un produit décapant.

8. Raccord de plomberie (1) selon l'une quelconque des revendications précédentes, **caractérisé en ce que** chacune des portions d'extrémité de l'élément tubulaire (2) définit une « portion d'extrémité à souder » (6, 7) et est conformée pour permettre un assemblage par ajustement serré et soudage avec une portion d'extrémité (8) d'un conduit (5), et **en ce que** la face externe (31) de chacune d'entre elles est au moins partiellement recouverte d'une bande (16) d'un matériau adapté pour changer d'aspect au fil d'une opération de soudage et pour présenter un aspect final représentatif de l'achèvement d'une opération de soudage.

## Patentansprüche

1. Sanitärverbinder (1), der dazu bestimmt ist, mindestens zwei Leitungen (5) aneinander anzuschließen, umfassend ein rohrförmiges Element (2) aus metallischem Material, das aus einer Umfangswand (3) ausgebildet ist, die einen Innendurchgang (4) begrenzt und eine Innenfläche (30) sowie eine Außenfläche (31) umfasst, wobei ein erster Endabschnitt (6, 7) des rohrförmigen Elements (2) zum Zusammenwirken mit einem Endabschnitt (8) einer der Leitungen (5) geformt ist, während mindestens ein anderer Endabschnitt zum Zusammenwirken mit einem Endabschnitt einer anderen Leitung geformt ist, wobei mindestens einer der Endabschnitte, genannt zu lötender Endabschnitt (6, 7), zum Ermöglichen einer Montage durch Presspassung und Lötung mit dem Endabschnitt (8) der betrachteten Leitung (5) geformt ist, wobei der Sanitärverbinder (1) mindestens einen Ring (9, 10) aus einem Hartlötmaterial, der durch Befestigungsmittel an den zu lötenden Endabschnitt (6, 7) des rohrförmigen Elements (2) angeschlossen ist, sowie Mittel zum Anzeigen einer gegebenen Temperatur des zu lötenden Endabschnitts (6, 7) des rohrförmigen Elements (2) umfasst, und **dadurch gekennzeichnet, dass** er mindestens einen Streifen (16) aus einem Material umfasst, das zum Ändern seines Aussehens im Verlauf eines Lötvorgangs und zum Darstellen eines endgültigen Aussehens angepasst ist, das die Vollendung eines Lötvorgangs darstellt, wobei der Streifen (16) die Außenfläche (31) der Umfangswand (3) des rohrförmigen Elements (2) auf der Höhe des zu lötenden Endabschnitts (6, 7) mindestens teilweise bedeckt.

2. Sanitärverbinder (1) nach Anspruch 1, **dadurch gekennzeichnet, dass** der Ring (9, 10) an der Innenfläche (30) der Umfangswand (3) des rohrförmigen Elements (2) befestigt ist.

3. Sanitärverbinder (1) nach einem der Ansprüche 1 oder 2,
**dadurch gekennzeichnet, dass** der Ring (9, 10) in einem Abstand (D, D') von einem freien Ende (12, 13) des zu lötenden Endabschnitts (6, 7) angeordnet ist und ein Volumen vorweist, das zwischen dem 1,4- und dem 2-Fachen des Volumens des Zwischenraums (14) liegt, der dazu bestimmt ist, sich zwischen dem zu lötenden Endabschnitt (6, 7) und dem Endabschnitt (8) der Leitung (5) zu erstrecken, mit dem er dazu bestimmt ist, zusammenzuwirken.

4. Sanitärverbinder (1) nach einem der vorstehenden Ansprüche,
**dadurch gekennzeichnet, dass** die Befestigungsmittel des Rings (9, 10) an der Umfangswand (3) des rohrförmigen Elements (2) durch Blockieranschläge (11) definiert sind, die durch Prägen an dem zu lötenden Endabschnitt (6, 7) des rohrförmigen Elements (2) ausgeführt sind.

5. Sanitärverbinder (1) nach einem der vorstehenden Ansprüche,
**dadurch gekennzeichnet, dass** der Ring (9, 10) in einer Aufnahme untergebracht ist, die im Bereich des zu lötenden Endabschnitts (6, 7) vorgesehen ist.

6. Sanitärverbinder (1) nach Anspruch 5, **dadurch gekennzeichnet, dass** die Aufnahme durch eine Schulter (15), die sich in den Innendurchgang (4) des rohrförmigen Elements (2) erstreckt, oder eine Nut definiert ist, die in der Innenfläche (30) der Umfangswand (3) des rohrförmigen Elements (2) ausgebildet ist.

7. Sanitärverbinder (1) nach einem der vorstehenden Ansprüche,
**dadurch gekennzeichnet, dass** der Ring (9, 10) mit einer Schicht eines Beizmittels umhüllt ist.

8. Sanitärverbinder (1) nach einem der vorstehenden Ansprüche, **dadurch gekennzeichnet, dass** jeder der Endabschnitte des rohrförmigen Elements (2) einen "zu lötenden Endabschnitt" (6, 7) definiert und zum Ermöglichen einer Montage durch Presspassung und Lötung mit einem Endabschnitt (8) einer Leitung (5) geformt ist, und dadurch, dass die Außenfläche (31) jeder von ihnen mindestens teilweise mit einem Streifen (16) aus einem Material bedeckt ist, das zum Ändern seines Aussehens im Verlauf eines Lötvorgangs und zum Vorweisen eines endgültigen Aussehens angepasst ist, das die Vollendung eines Lötvorgangs darstellt.

## Claims

1. Plumbing fitting (1)for connecting at least two pipes (5) together, comprising a tubular element (2) made of metal and formed of a peripheral wall (3) delimiting an inner passage (4) and having an inner face (30) and an outer face (31), a first end portion (6, 7) of said tubular element (2) being shaped to engage with an end portion (8) of one of the pipes (5) while at least one other end portion is shaped to engage with an end portion of another pipe, at least one of the end portions, referred to as the end portion (6, 7) to be soldered, being shaped to allow assembly with the end portion (8) of the pipe (5) in question through press-fitting and soldering, said plumbing fitting (1) comprising at least one ring (9, 10) of a brazing material, said ring being connected to the end portion (6, 7) to be soldered of the tubular element (2) by fastening means, as well as means for indicating a given temperature of the end portion (6, 7) to be soldered of the tubular element (2), and being **characterized in that** it comprises at least one strip (16) of a material designed to change appearance over the course of a soldering operation and to have a final appearance representative of the completion of a soldering operation, said strip (16) at least partially covering the outer face (31) of the peripheral wall (3) of the tubular element (2) at the end portion (6, 7) to be soldered.

2. Plumbing fitting (1) according to claim 1, **characterized in that** said ring (9, 10) is fastened to the inner face (30) of the peripheral wall (3) of the tubular element (2).

3. Plumbing fitting (1) according to either one of claims 1 and 2, **characterized in that** the ring (9, 10) is arranged at a distance (D, D') from a free end (12, 13) of the end portion (6, 7) to be soldered and has a volume of between 1.4 and 2 times the volume of the gap (14) intended to extend between the end portion (6, 7) to be soldered and the end portion (8) of the pipe (5) with which it is intended to engage.

4. Plumbing fitting (1) according to any one of the preceding claims, **characterized in that** the means for fastening the ring (9, 10) to the peripheral wall (3) of the tubular element (2) are defined by locking stops (11) formed on the end portion (6, 7) to be soldered of the tubular element (2) by stamping.

5. Plumbing fitting (1) according to any one of the preceding claims, **characterized in that** the ring (9, 10) is housed in an accommodating space provided at the end portion (6, 7) to be soldered.

6. Plumbing fitting (1) according to claim 5, **characterized in that** the accommodating space is defined by a shoulder (15) extending into the inner passage (4) of the tubular element (2) or a groove formed in the inner face (30) of the peripheral wall (3) of the tubular element (2).

7. Plumbing fitting (1) according to any one of the preceding claims, **characterized in that** the ring (9, 10) is coated with a layer of a stripping agent.

8. Plumbing fitting (1) according to any one of the preceding claims, **characterized in that** each of the end portions of the tubular element (2) defines an "end portion (6, 7) to be soldered" and is shaped to allow assembly with an end portion (8) of a pipe (5) through press-fitting and soldering, and **in that** the outer face (31) of each of them is at least partially covered with a strip (16) of a material designed to change appearance over the course of a soldering operation and to have a final appearance representative of the completion of a soldering operation.
